# EUROPÄISCHE PATENTANMELDUNG

(11) **EP 2 463 143 A1**
(43) Veröffentlichungstag der Anmeldung: **13.06.2012**
(21) Anmeldenummer: 11005943.3
(22) Anmeldetag: 20.07.2011
(51) Int. Cl.: B60N 2/30, B60N 2/16, B60P 3/36

(54) **Sitz in Längsbank**

(30) Priorität: 07.12.2010 DE 202010016271 U
(71) Anmelder: Hymer AG, 88339 Bad Waldsee (DE)
(72) Erfinder: Wiest, Hansi, 88339 Bad Waldsee (DE)
(74) Vertreter: Otten, Herbert

(57) **Zusammenfassung**

Die Erfingund betrifft ein Campingfahrzeug, insbesondere Wohnmobil oder Campingbus mit einer Rundsitzgruppe in einem Wohnbereich, wobei die Rundsitzgruppe eine Querbank und zwei Längsbänke bezogen auf die Fahrrichtung aufweist und wobei unter den Längsbänken ein Stauraum vorgesehen ist, wobei in zumindest einem Teil des Stauraums unter mindestens einer Längsbank mindestens ein fest mit einem Unterbau des Campingfahrzeugs verbundener aufklappbarer Fersonensitz angeordnet ist, welcher insbesondere einen integrierten 3-Punkt-Sicherheitsgurt aufweist.

## Beschreibung

Die Erfindung betrifft ein Campingfahrzeug, insbesondere ein Wohnmobil oder einen Campingbus mit einer Rundsitzgruppe in einem Wohnbereich, wobei die Rundsitzgruppe eine Querbank und zwei Längsbänk, bezogen auf die Fahrtrichtung des Campingfahrzeugs aufweist. Unter den Längsbänken und vorzugsweise unter der Querbank ist je ein Stauraum vorgesehen.

Aus dem Stand der Technik, beispielsweise aus der DE 10 2008 032 403 A1 sowie aus der deutschen Gebrauchsmusterschrift G 83 24 104.3 U1 sind Möglichkeiten bekannt, Sitzanordnungen für Fahrzeuge bzw. Fahrzeuginneneinrichtungen zu schaffen, welche in Stauräumen verstaubar oder als andersartige Sitzgruppen ausgebildet sind.

Bei Campingfahrzeugen, insbesondere Wohnmobilen oder Campingbussen besteht jedoch die seitens des Gesetzgebers immer schärfer werdende Sicherheitsanforderung an Personensitze, welche während der Fahrt den darauf sitzenden Personen einen optimalen Halt, vorzugsweise mit einem 3-Punkt-Sitzgurt bieten sollen. Nachteilig an entsprechenden Sitzen ist jedoch, dass diese oftmals im Wohnbereich eines Campingfahrzeugs den ästhetischen Anforderungen an das Wohnbild nicht entsprechen. Dies ist insbesondere der Fall, da sie in ihrer Anordnung äußerst unpraktisch sind, da üblicherweise der Wohnbereich, beispielsweise eine Sitzecke in Form einer Rundsitzgruppe mit einander zugewandten Sitzmöglichkeiten ausgebildet wird, entsprechende Personentransportsitze während der Fahrt jedoch in Fahrtrichtung ausgerichtet sein sollten.

Die Erfindung hat sich daher die Aufgabe gestellt, im Wohnbereich eines Campingfahrzeugs Personensitze bereitzustellen, welche die oben angegebenen Nachteile des Standes der Technik vermeiden.

Erfindungsgemäß wird diese Aufgabe dadurch gelöst, dass in einer Rundsitzgruppe mit einer Querbank und zwei Längsbänken in mindestens einem Teil des Stauraums unter mindestens einer Längsbank mindestens ein fest mit einem Unterbau des Campingfahrzeugs verbundener aufklappbarer Personensitz angeordnet ist, welcher insbesondere einen integrierten 3-Punkt-Sicherheitsgurt aufweist. Der aufklappbare Personensitz weist dabei in seiner Sitzrichtung eine um 90° zur betreffenden Längsbank gedrehte Sitzposition auf, so dass die auf dem Personensitz sitzende Person in Fahrtrichtung blickt.

In einer überdies zweckmäßigen Ausgestaltung der Erfindung ist vorgesehen, dass eine Sitzfläche der jeweiligen Längsbank aufklappbar und/oder abnehmbar ausgebildet ist, um ein Aufklappen des Personensitzes zu ermöglichen.

Aufgrund dessen, dass der aufklappbare Personensitz unter der Sitzfläche der mindestens einen Längsbank angeordnet ist, stellt die Sitzfläche ein zu beseitigendes Hindernis vor dem Aufklappen des Personensitzes dar. Durch das Abnehmen der Sitzfläche oder das seitliche Hochklappen wird dieses Hindernis beseitigt.

In einer weiteren zweckmäßigen Ausgestaltung der Erfindung ist vorgesehen, dass mindestens eine Seitenwand des Stauraums unter der jeweiligen Längsbank ganz oder teilweise aufklappbar und/oder abnehmbar ausgebildet ist, um einen Fußraum für eine auf dem Personensitz sitzende Person freizugeben.

Durch ein Entfernen der Seitenwand in Form eines Wegklappens oder Abnehmens wird der aufgeklappte Personensitz besser begehbar, da eine diesen besetzende Person nicht in eine Art Kiste, gebildet durch die Form des Stauraums unter der Längsbank einsteigen muss.

In einer weiteren zweckmäßigen Ausgestaltung der Erfindung ist vorgesehen, dass der Personensitz mit drei parallelen Gelenkachsen, insbesondere einer Sockelachse am Unterbau, einer Schwenkachse an der Sitzfläche sowie einer Schwenkachse an der Rückenlehne ausgebildet ist.

Auf diese Weise lässt sich der aufklappbare Personensitz besonders kompakt und platzsparend im Stauraum unter der Längsbank unterbringen.

Der erfindungsgemäße Gedanke betrifft vorliegend die verstaute Anordnung eines aufklappbaren Personensitzes im Innenbereich eines Stauraumes einer Längssitzbank einer Rundsitzgruppe. Der technische Aufbau des aufklappbaren Personensitzes spielt dabei eine untergeordnete Rolle, da insbesondere die Getrenntheit der Sitzflächen für die Rundsitzgruppe und der Sitzflächen für den Personentransport vorliegend den erfindungswesentlichen Gedanken darstellen.

Zur weiteren Verdeutlichung der erfindungsgemäßen Anordnung eines Personensitzes in einem Campingfahrzeug ist dies im nachfolgenden Ausführungsbeispiel näher dargestellt. Die Erfindung ist jedoch nicht auf das Ausführungsbeispiel beschränkt, sie umfasst vielmehr all diejenigen Ausgestaltungen, welche vom erfindungswesentlichen Gedanken Gebrauch machen.

Es zeigen
- Figur 1: eine schematische Seitenansicht eines Campingfahrzeugs,
- Figur 2: eine Draufsicht in Form einer Grundrissdarstellung eines entsprechenden Campingfahrzeugs,
- Figur 3: eine Detailansicht einer entsprechenden Rundsitzgruppe mit integrierten Personensitzen.

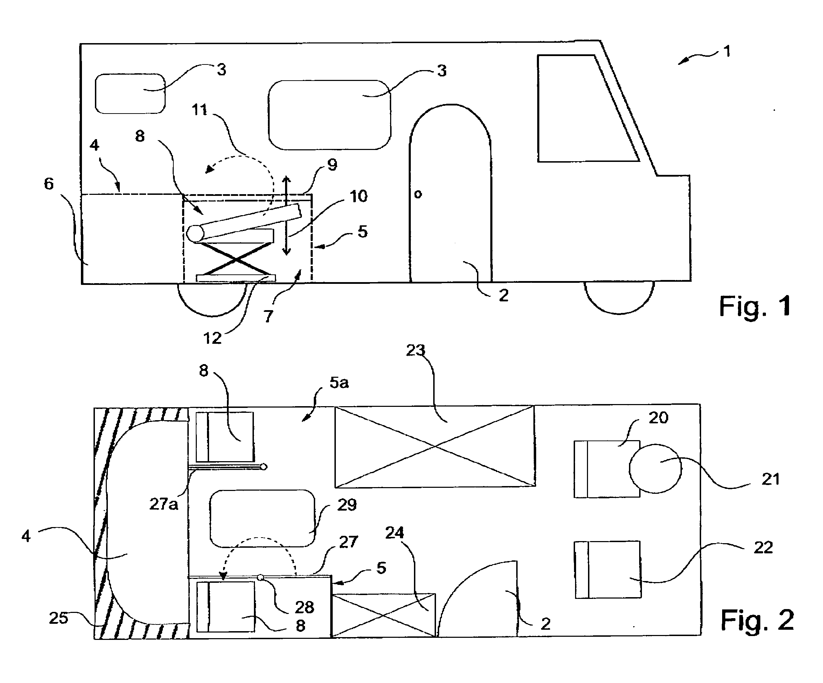

Im Einzelnen zeigt Figur 1 ein Campingfahrzeug 1 mit einem Eingang 2 sowie Wohnraumfenstern 3.

Gestrichelt dargestellt ist im hinteren Bereich des Campingfahrzeugs 1 eine Rundsitzgruppe angedeutet, wobei die Rundsitzgruppe eine Querbank 4 im Heckbereich sowie eine Längsbank 5 umfasst. Unter der Querbank 4 befindet sich ein Stauraum 6, unter der Längsbank 5 ein Stauraum 7.

Im Stauraum 7 ist ein Personensitz 8 angeordnet, welcher vorliegend in zusammengeklapptem Zustand dargestellt ist. Oberhalb des Personensitzes 8 wird der Stauraum 7 der Längsbank 5 durch eine Sitzfläche 9 abgeschlossen, auf welcher Personen in der Rundsitzgruppe bequem Platz nehmen können, und einander zugewandt sind. Der Personensitz 8 kann bei Entfernen der Sitzfläche 9 mittels einer Hubbewegung 10 und einer Schwenkbewegung 11 aufgerichtet werden, so dass eine Person auf dem Personensitz 8 in Fahrtrichtung blickend Platz nehmen kann. Der Personensitz 8 ist über den Sockel 12 fest mit dem Fahrzeug verbunden, so dass eine ausreichende Sicherheit während der Fahrt gewährleistet ist. Vorzugsweise verfügt der Personensitz über einen Hüft-Gurt oder einen Drei-Punkt-Gurt (nicht dargestellt).

Figur 2 zeigt eine schematische Draufsicht eines Grundrisses des erfindungsgemäßen Campingfahrzeugs 1. Das Campingfahrzeug 1 umfasst hierbei einen Fahrersitz 20 mit einem Lenkrad 21 sowie einen Beifahrersitz 22. Im Innenraum sind Möbel 23 sowie 24 schematisch dargestellt, ohne näher auf die Möblierung einzugehen.

Im Heckbereich des Campingfahrzeugs 1 befindet sich eine Rundsitzgruppe, bestehend aus einer Querbank 4 mit darauf angeordnetem Polster 25 sowie daran anschließenden, in Längsrichtung des Fahrzeugs angeordneten Längsbänken 5 sowie 5a.

Die Längsbank 5 umfasst dabei eine Seitenwand 27, welche auf ihrer Hälfte ein Gelenk 28 aufweist. Auf diese Weise ist der vordere Teil der Seitenwand 27 über das Gelenk 28 nach hinten wegklappbar. In Figur 2 ist in der Längssitzbank der geschlossene Zustand der Seitenwand 27 dargestellt. In der Längssitzbank 5a ist der geöffnete Zustand der Seitenwand 27a dargestellt.

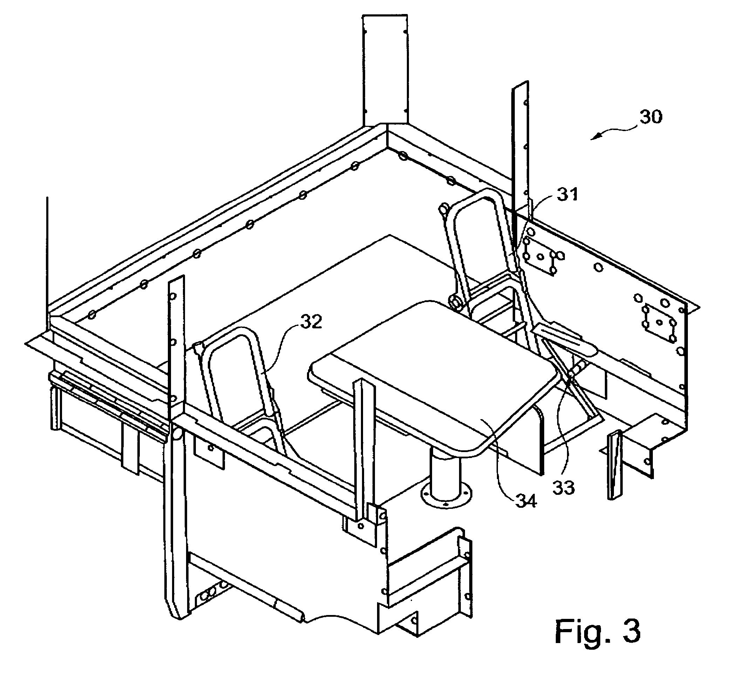

Figur 3 zeigt eine detaillierte Darstellung der Rundsitzgruppe 30 ohne darauf angeordnete Polster. Die Seitenwände der Längsbänke sind vorliegend weggeklappt und die Sitzflächen entfernt. Im Bereich der Stauräume der Längssitzbänke sind Personensitze 31 sowie 32 dargestellt, auf denen Personen in Fahrtrichtung sitzend transportiert werden können. Zur Übersichtlichkeit und Darstellung der jeweiligen Schwenkachsen wurden die Polster ausgeblendet. Die Personensitze umfassen in ihrem unteren Bereich eine Art Scherengelenk 33, mit dessen unteren Ende sie fest mit dem Fahrzeug verbunden sind.

Sowohl Figur 3 als auch Figur 2 zeigen im Mittelbereich der Rundsitzgruppe einen Tisch 34 bzw. 29.

### Bezugszeichenliste:

- 1: Campingfahrzeug
- 2: Eingang
- 3: Wohnraumfenster
- 4: Querbank
- 5, 5a: Längsbank
- 6: Stauraum
- 7: Stauraum
- 8: Personensitz
- 9: Sitzfläche
- 10: Hubbewegung
- 11: Schwenkbewegung
- 12: Sockel
- 20: Sitz
- 21: Lenkrad
- 22: Sitz
- 23: Möbel
- 24: Möbel
- 25: Polster
- 27, 27a: Seitenwand
- 28: Gelenk
- 29: Tisch
- 30: Rundsitzgruppe
- 31: Personensitz
- 32: Personensitz
- 33: Scherengelenk
- 34: Tisch

## Patentansprüche

1. Campingfahrzeug, insbesondere Wohnmobil oder Campingbus mit einer Rundsitzgruppe in einem Wohnbereich, wobei die Rundsitzgruppe eine Querbank und zwei Längsbänke bezogen auf die Fahrrichtung aufweist und wobei unter den Längsbänken ein Stauraum vorgesehen ist, **dadurch gekennzeichnet, dass** in zumindest einem Teil des Stauraums unter mindestens einer Längsbank mindestens ein fest mit einem Unterbau des Campingfahrzeugs verbundener aufklappbarer Personensitz angeordnet ist, welcher insbesondere einen integrierten 3-Punkt-Sicherheitsgurt aufweist.

2. Campingfahrzeug nach Anspruch 1, **dadurch gekennzeichnet, dass** eine Sitzfläche der jeweiligen Längsbank aufklappbar und/oder abnehmbar ausgebildet ist, um ein Aufklappen des Personensitzes zu ermöglichen.

3. Campingfahrzeug nach einem der Ansprüche 1 bis 2, **dadurch gekennzeichnet, dass** mindestens eine Seitenwand des Stauraums unter der jeweiligen Längsbank ganz oder teilweise aufklappbar und/oder abnehmbar ausgebildet ist, um einen Fußraum für eine auf dem Personensitz sitzende Person freizugeben.

4. Campingfahrzeug nach einem der Ansprüche 1 bis 3, **dadurch gekennzeichnet, dass** der Personensitz mit drei parallelen Gelenkachsen, insbesondere einer Sockelachse am Unterbau, einer Schwenkachse an der Sitzfläche und einer Schwenkachse an der Rückenlehne ausgebildet ist.
